# EUROPÄISCHE PATENTSCHRIFT

(11) **EP 2 473 724 B1**
(45) Veröffentlichungstag und Bekanntmachung des Hinweises auf die Patenterteilung: **23.04.2014**
(21) Anmeldenummer: 10768372.4
(22) Anmeldetag: 01.09.2010
(51) Int. Cl.: F02B 37/18, F01D 17/10

(54) **VERFAHREN ZUR MONTAGE UND EINSTELLUNG EINES STELLGLIEDS EINES ABGASTURBOLADERS SOWIE EIN FÜR EINE AUFLADEVORRICHTUNG BESTIMMTES STELLGLIED**
BY-PASS ARRANGEMENT FOR A TURBO CHARGER
DISPOSITIF BY-PASS POUR TURBO COMPRESSEUR

(30) Priorität: 03.09.2009 DE 102009039911; 21.11.2009 DE 102009054241
(43) Veröffentlichungstag der Anmeldung: 11.07.2012
(73) Patentinhaber: Volkswagen Aktiengesellschaft, 38440 Wolfsburg (DE); IHI Charging Systems International GmbH, 69126 Heidelberg (DE); Mahle International GmbH, 70376 Stuttgart (DE)
(72) Erfinder: WERSTAT, Eike, 38350 Helmstedt (DE); DE GRAAF, Martijn, 38100 Braunschweig (DE); JÄCKEL, Torsten, 38176 Wendeburg (DE); LOWAK, Tim, 69181 Leimen (DE); SCHÄFFNER, Alexander, 68723 Plankstadt (DE); DOBERNIG, Daniel, 9131 Grafenstein (AT); GRACNER, Reinhold, A-9112 Gritten (AT); KIERAT, Jaroslav, 67227 Frankenthal (DE)
(74) Vertreter: Scheffler, Jörg
(86) Internationale Anmeldenummer: PCT/DE2010/001028
(87) Internationale Veröffentlichungsnummer: WO 2011/026471

(56) Entgegenhaltungen:
- DE-U1-202004 016 321
- DE-U1-202008 011 150
- FR-A1- 2 707 712
- GB-A- 2 344 400
- US-A1- 2005 050 888

## Beschreibung

Die Erfindung betrifft ein Verfahren zur Montage oder Einstellung eines Stellglieds eines Abgasturboladers, wobei das Stellglied in kinematischer Kopplung ein der Betätigung eines Bypassventils dienendes Stellmittel, welches einen axial beweglichen Stellstab hat, der mittels eines Koppelelements mit einem insbesondere als Hebelarm ausgeführten Betätigungsabschnitt des Bypassventils verbunden ist, aufweist, wobei zunächst eine optimale Position des Koppelelements gegenüber dem Stellstab in Abhängigkeit von der Position des Bypassventils und des Stellmittels festgelegt wird und diese anschließend fixiert wird, wobei zunächst der Betätigungsabschnitt und der Stellstab mittels des Koppelelements einstellbar verbunden werden, anschließend das Stellmittel in eine seiner Schließstellung entsprechenden Position verfahren wird und schließlich in der vorbestimmten relativen Position mittels eines Werkzeugs eine das Bypassventil in seiner geschlossenen Position festlegende Kraft in das Stellglied eingeleitet und die so eingestellte Relativposition zwischen dem Betätigungsabschnitt und dem Stellstab festgelegt wird. Weiterhin betrifft die Erfindung ein Stellglied für eine Aufladevorrichtung, insbesondere einen Abgasturbolader, mit zumindest einem Ventilelement, insbesondere einem Wastegate, welches über eine Verbindungseinrichtung mit zumindest einem Stellmittel des Stellglieds gekoppelt und von diesem betätigbar ist, wobei im Bereich der Verbindungseinrichtung eine Toleranzausgleichseinrichtung vorgesehen ist, die zumindest ein Koppelelement umfasst, welches über eine Steckverbindung mit zumindest einem Stellstab der Toleranzausgleichseinrichtung verbunden ist, wobei die Steckverbindung im Wesentlichen senkrecht zu einer Mantelfläche des Koppelelements ausgebildet ist.

Im Betrieb einer Brennkraftmaschine mit einem Abgasturbolader wird über einen Bypasskanal für eine Turbine des Abgasturboladers ein Teilstrom des Abgases wahlweise an der Turbine vorbeigeleitet. Hierzu ist in dem Bypasskanal ein auch als Wastegateventil bezeichnetes Bypassventil zum Öffnen oder Schließen des Bypasskanals angeordnet, welches in einem geschlossenen Zustand gegen einen Ventilsitz gedrückt wird. Bei einer Lastanforderung an die Brennkraftmaschine wird das Ventil geschlossen und mit einer vorbestimmten Kraft gegen den Ventilsitz gedrückt, wobei die Kraft derart gewählt wird, dass gegen den Abgasdruck der Brennkraftmaschine während der Lastanforderung der Bypasskanal weitestgehend strömungs- und druckdicht verschlossen ist.

Die Ladedruckregelung bei Motoren mit Abgasturboladung durch einen Abgasturbolader erfolgt bei derartigen Abgasturboladern mittels pneumatisch arbeitender Druckaktuatoren als Stellmittel, die eine definierte Federvorspannung aufweisen.

Die Entwicklung bei diesen Brennkraftmaschinen wird auch hier zunehmend von einem hohen Drehmoment bei relativ niedrigen Drehzahlen und einem verzögerungsfreien Ansprechverhalten geprägt. Diesen Sachverhalten wird mit einer Auslegung des Abgasturboladers Rechnung getragen, die speziell für den unteren Drehzahlbereich optimiert ist. Solche Abgasturbolader sind bezüglich ihres Durchsatzvermögens bezogen auf das Hubvolumen des Motors sehr klein, sodass sie schon bei kleinen Abgasmassenströmen hohe Druckverhältnisse über den Lader realisieren können. Bei hohen Motordrehzahlen und großen Abgasmassenströmungen werden entsprechend große Abgasmengen über das Wastegate an der Turbine vorbeigeführt.

Durch ein gattungsgemäßes Verfahren sowie ein derartiges Stellglied gemäß der US 2005/050888 A1 ist es bekannt, das Ventil in die geschlossene Position zu bringen und die sich daraus ergebende Relativposition zwischen dem Endstück des Stellstabes und dem Hebelarm durch eine Schweißverbindung festzulegen. In Bezug auf den Stellstab wird so eine axiale Einstellmöglichkeit realisiert, durch welche sich die exakte Position des Hebelarmes entlang der Achse des Stellstabes von einem Turbolader zum nächsten verändert bzw. verändern kann. Hierzu umfasst der Hebelarm an seinem dem Drehgelenk abgewandten Ende einen hülsenförmigen Teilabschnitt, in welchen das Endstück des Stellstabes translatorisch beweglich einführbar ist.

Bei dem durch die DE 10 2007 009 267 A1 bekannten elektrisch betriebenen Wastegatesteller kann dieser unabhängig von den am Motor anliegenden Drücken geregelt werden. In Abhängigkeit von der Stromstärke, mit welcher der elektrisch betriebene Wastegatesteller angesteuert wird, wirkt eine mehr oder weniger starke Betätigungskraft auf ein mechanisches Betätigungsglied des Wastegateventils.

Die DE 10 2008 015 855 A1 offenbart bereits ein Verfahren zum Betreiben einer Brennkraftmaschine mit einem Abgasturbolader, wobei in dem Abgastrakt ein von einem Wastegateventil beherrschter Wastegatekanal derart vorgesehen ist, dass der Wastegatekanal die Turbine des Abgasturboladers überbrückt. Hierzu ist ein Stellglied zur Betätigung des Wastegateventils vorgesehen, wobei bei einem Übergang vom Hochlastbetrieb in den Teillast- oder Schubbetrieb das Wastegate derart geöffnet wird, dass sich eine Pumpleistung des dieser Turbine zugeordneten Verdichters reduziert.

Aus der DE 10 2005 023 260 A1 ist ein Verfahren zur Regelung eines Abgasturboladers bekannt, wobei ein elektrisch betätigbares Wastegateventil für die Turbine des Abgasturboladers vorgesehen ist. Die elektrische Betätigung ermöglicht im Gegensatz zu einer Druckdose eine schnelle Änderung der Stellung des Wastegateventils. Als Führungsgröße zur Regelung des elektrisch betätigbaren Wastegateventils des Abgasturboladers wird ein Betriebspunkt des Verdichters herangezogen. Hierdurch kann ein schneller Druck- und Drehzahlabbau an der Turbine des Abgasturboladers herbeigeführt werden, wodurch beim Übergang vom Hochlast- in den Teillast- oder Schubbetrieb die Pumpgefahr des Abgasturboladers wirksam verhindert wird.

Die DE 10 2008 011 416 A1 bezieht sich auf einen Turbolader mit einem Wastegatekanal, der über eine Betätigungseinrichtung geöffnet und geschlossen werden kann. Die Betätigungseinrichtung weist ein Schließelement auf, das in den Wastegatekanal einschwenkbar ist, um diesen zu schließen. Das Öffnen und Schließen des Wastegates erfolgt mittels einer Klappe, die von einem pneumatischen Aktuator gesteuert wird.

Die Regelung mittels eines pneumatischen Aktuators birgt einige Nachteile. Diese sind beispielsweise das Flattern der Klappe im Abgasstrom kurz vor dem Erreichen des Öffnungsdrucks der Klappe und die damit gegebenenfalls verbundene Zertrümmerung des Klappensitzes. Außerdem ist eine Regelung mittels einer Steuerdose nur möglich, wenn genügend Über- oder Unterdruck vorhanden ist.

Die EP 1 714 064 B1 offenbart eine Einrichtung zur Betätigung eines Steuerelements, wobei das Steuerelement mittels eines Stellers bewegbar ist und an einem Stellglied des Stellers ein Führungsbolzen aufgenommen ist, welcher an einem um eine Gelenkstelle verschwenkbaren Stützhebel geführt ist und einem Kulissenhebel eine Schwenkbewegung zur Betätigung des Steuerelements aufprägt, und wobei sich der Führungsbolzen innerhalb der Kulisse des Kulissenhebels verschieben kann. Der Kulissenhebel und der Stützhebel sind dabei relativ zueinander bewegbar. Diese bekannte Lösung weist einen hohen Aufwand zur Herstellung und zur Montage auf, woraus hohe Kosten resultieren.

Ferner betrifft die nicht vorveröffentlichte WO 2010/149442 A1 einen Turbolader für einen Verbrennungsmotor eines Kraftfahrzeugs. Der Turbolader hat eine Regeleinrichtung zur Regelung des die Turbine durchströmenden Abgasstroms. Die Regeleinrichtung weist ein Einstellelement, einen drehfest mit dem Einstellelement verbundenen Regelhebel, ein Einstellstück und eine Regelstange auf. Der Regelhebel ist mit der Regelstange über das Einstellstück verbunden. Das Einstellelement ist als Wastegate-Ventil zur Einstellung der die Turbine durchströmenden Abgasmenge ausgebildet. Das Einstellstück weist eine Führung zur Führung der Regelstange auf. Die Regelstange ist in dieser Führung stufenlos verschiebbar und kann in einer beliebigen axialen Position in der Führung bevorzugt durch einen Stoffschluss fixiert werden.

In der Praxis erweist sich vor allem auch die Zuordnung des Stellmittels zu dem Bypassventil mittels des Koppelelements als entscheidend für die Betriebssicherheit und die Funktion des Abgasturboladers.

Zu diesem Zweck schlägt die DE 699 22 302 T2 bereits eine Schweißverbindung zwischen dem Stellstab für die Drucksteuerung eines Abgasturboladers und dem Hebelarm vor. Um den Abhebepunkt einzustellen, wird bei dem Bypassventil, durch das ein Umgehungsweg für das Abgas verschließbar ist, die Bypassventilstellung vorübergehend fixiert und der Druck in einem pneumatischen Stellglied auf einen gewünschten Druck erhöht. In der so geschlossenen Stellung des Bypassventils ist das Endstück des Stellstabs innerhalb eines zylindrischen Teilabschnitts des Hebelarms angeordnet und die so eingestellte Relativposition wird durch Verschweißen festgelegt. Die entsprechende Länge des Stellstabs wird somit automatisch bei der Montage eingestellt, sodass keine Notwendigkeit zur Einstellung der Länge des Stellstabs besteht.

Als problematisch erweisen sich in der Praxis jedoch Toleranzeinflüsse aufgrund der gelenkigen Verbindung des Hebelarms und des Stellstabs mittels des Koppelelements, die in der Praxis dazu führen können, dass die Schließ- bzw. Öffnungskräfte für das Bypassventil nicht korrekt bemessen sind, und zwar derart, dass die gewünschte Offnungscharakteristik nicht erreicht wird.

Man könnte daran denken, die Toleranzen zu reduzieren, um so die sich aus der Verkettung der Funktionselemente ergebende Abweichung zu vermeiden. Hierbei ist jedoch zu berücksichtigen, dass der Abgasturbolader im Betrieb erheblichen thermischen Einflüssen unterworfen ist, sodass thermische Dehnungen nicht grundsätzlich ausgeschlossen werden können. Um dabei ein Blockieren einzelner Elemente zuverlässig zu vermeiden, sind vielmehr Toleranzmaße grundsätzlich erforderlich.

Vor diesem Hintergrund liegt der Erfindung die Aufgabe zugrunde, ein Verfahren zur Montage und Einstellung eines Stellglieds derart zu gestalten, dass auftretende Toleranzen in optimaler Weise eliminiert werden. Weiterhin soll ein für das Verfahren geeignetes, einstellbares Stellglied geschaffen werden, welches eine optimale Einstellbarkeit gewährleistet.

Die erstgenannte Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren vorgesehen, bei dem das Koppelelement gegenüber dem Stellstab zunächst mit zwei Freiheitsgraden beweglich vorpositioniert wird, anschließend die Sollposition in Achsrichtung und quer zu der Achsrichtung des Stellstabes eingestellt wird und in der so eingestellten Position das Koppelelement mit dem Stellstab verschweißt wird. Um also der geschlossenen Stellung des Bypassventils die mittels des elektrischen Wastegatestellers eingestellte Stellstabposition entsprechend zuzuordnen, ist der Stellstab in seiner axialen Position gegenüber dem Betätigungshebel zunächst noch nicht festgelegt. Dabei ist zwar der Betätigungsabschnitt des Bypassventils mit dem Koppelelement beispielsweise über ein Scharniergelenk schwenkbeweglich verbunden, jedoch kann der Stellstab in unterschiedlichen axialen Positionen an dem Koppelelement fixiert werden. Hierzu ist der Stellstab geschlitzt, sodass das Koppelelement unterschiedlich weit in den Schlitz eingeschoben und so eine Einstellbarkeit in axialer Richtung sowie in einer Querrichtung ermöglicht werden kann. Bei einer alternativen Ausgestaltung weist das Koppelelement eine Aufnahme für den Stellstab auf. Diese Aufnahme verfügt über eine axiale Ausdehnung, um den Stellstab in der erforderlichen Position auszurichten und zu fixieren. Hierbei ist die Aufnahme vorzugsweise als Langloch ausgebildet. In diese Aufnahme greift ein an dem Stellstab angeformter oder fixierter Stift oder Pin ein. Die nachteiligen Auswirkungen der systembedingten Toleranzmaße werden dadurch eliminiert, dass das Stellmittel vor der endgültigen Verbindung des Hebelarms mit dem Stellstab mittels des Koppelelements nicht lediglich in seine der geschlossenen Bypassventilstellung entsprechende Position verfahren wird, sondern dass das Stellglied, nämlich zumindest eines der kinematisch gekoppelten Elemente Stellmittel, Stellstab, Koppelelement und/oder Bypassventil, durch ein externes Werkzeug mit einer zusätzlichen Kraft belastet wird. Zur Festlegung der korrekten Relativposition wird somit ein Aktuator als Hilfswerkzeug eingesetzt, dessen Stellkraft das Bypassventil in die geschlossene Position zwingt.

Mittels des Werkzeugs könnte ein Drehmoment erzeugt werden, welches auf den Betätigungsabschnitt des Bypassventils oder auf das Koppelelement wirkt, um so das Bypassventil in seine geschlossene Position zu zwingen. Besonders Erfolg versprechend ist es hingegen, wenn mittels des Werkzeugs eine in Achsrichtung des Stellstabs des Stellmittels wirkende Kraft eingeleitet und während dieser Krafteinleitung die so erreichte Relativposition zwischen dem Betätigungsabschnitt und dem Stellstab festgelegt wird. Hierdurch entspricht die mittels des Werkzeugs eingeleitete Kraft in ihrer Wirkrichtung den im Betrieb auftretenden, mittels des Stellmittels eingeleiteten Stellkräften. Eine unerwünschte, insbesondere von auftretenden Betriebszuständen abweichende Krafteinwirkung kann dadurch vermieden und beispielsweise eine elastische Verformung ausgeschlossen werden.

Die Stellkraft des Werkzeugs könnte grundsätzlich in einer beliebigen Verbindungsstelle der gekoppelten Elemente des Stellglieds eingeleitet werden, beispielsweise auch in den mit dem Bypassventil unbeweglich verbundenen Hebelarm. Besonders vorteilhaft ist es hingegen, wenn die mittels des Werkzeugs eingeleitete Kraft in das mit dem Hebelarm des Bypassventils schwenkbeweglich verbundene Koppelelement eingeleitet wird, sodass insbesondere die in der gelenkigen Verbindung des Hebelarms mit dem Koppelelement auftretenden und aufgrund der erforderlichen Beweglichkeit unvermeidlichen Toleranzen zuverlässig eliminiert werden können. Dabei umfasst das Koppelelement sowohl einen plattenförmigen Grundkörper als auch eine gegenüber dem Grundkörper vorzugsweise senkrecht vorspringende Schwenkachse, sodass die Krafteinleitung auch in die Schwenkachse, beispielsweise im Bereich ihres axialen Endbereichs, erfolgen kann.

Grundsätzlich kann das erfindungsgemäße Verfahren bei druckbeaufschlagbaren, insbesondere also pneumatisch betätigbaren Stellmitteln zum Einsatz kommen. Besonders zweckmäßig ist es hingegen, wenn ein elektrisches Stellmittel vor der Festlegung der Relativposition zwischen dem Hebelarm oder dem Betätigungsabschnitt und dem Stellstab durch eine entsprechende Ansteuerung des elektrischen Antriebs des Stellmittels in eine Sollposition verfahren wird, sodass also auch die innerhalb der motorischen Antriebseinheit des Stellmittels auftretenden Toleranzen eliminiert werden können. Dabei weicht die Sollposition vorzugsweise von einem internen Anschlag des Stellmittels ab, um so auch bei abweichenden Betriebsbedingungen eine zuverlässige Kraftübertragung mittels des Stellstabs sicherzustellen. Die Sollposition wird dabei ausschließlich durch Bestromung erreicht, sodass insbesondere keine äußeren Krafteinwirkungen zur Festlegung des Stellmittels in der Sollposition des elektrischen Wastegatestellers erforderlich sind. Montage und Einstellung werden dadurch wesentlich vereinfacht.

Eine andere, ebenfalls besonders Erfolg versprechende Abwandlung wird auch dann erreicht, wenn das Koppelelement mit dem Stellstab durch eine Laserschweißverbindung verbunden wird, wobei die Schweißnaht insbesondere beiderseits des Stellstabs parallel zu dessen Mittelachse im Übergangsbereich zu dem Koppelelement eingebracht wird, um so das aufzuschmelzende Volumen so gering wie möglich zu halten.

Dabei hat es sich zur Vermeidung unerwünschter thermischer Einflüsse bereits als vorteilhaft erwiesen, wenn der zu schweißende Bereich während des Schweißens beispielsweise mittels eines gezielt aufgebrachten Luftstroms gekühlt wird.

Eine andere, ebenfalls besonders praxisgerechte Abwandlung wird dann erreicht, wenn mittels eines Wegsensors eine Überprüfung der Ist-Position zu der Soll-Position des Stellstabs durchgeführt wird. Dabei kann der Wegsensor sowohl als ein integraler Bestandteil des Stellglieds, insbesondere des elektrischen Stellmittels, oder als ein externes Werkzeug ausgeführt sein. Auf diese Weise kann eine einfache Überprüfung der geschlossenen und der geöffneten Position durch den Wegsensor und des zugleich erfassten Spannungsverlaufs erfolgen, welcher mit dem Hub korreliert. Bei der Einstellungsüberprüfung wird das elektrische Stellmittel mit einer elektrischen Spannung versorgt und die Ist-Position als Funktion der anliegenden Spannung erfasst.

Weiterhin erweist es sich als besonders hilfreich, wenn mittels eines Konzentrizitätsführungswerkzeugs eine Auslenkung des Stellstabs aus seiner Sollachse während der Montage und Einstellung vermieden wird. Hierdurch wird eine fluchtende, also konzentrische Anordnung des Stellstabs gegenüber einer Führungsbuchse des Stellmittels sichergestellt, indem eine Auslenkung des Stellstabs quer zu seiner Haupterstreckung verhindert wird. Auf diese Weise ist im Betrieb eine unerwünscht hohe Reibung oder gar Biegung des Stellmittels ausgeschlossen. Das Konzentrizitätsführungswerkzeug liegt dabei an zumindest drei Punkten am Umfang des Stellstabs einerseits und an dem Gehäuse oder der Schiebe- bzw. Führungsbuchse des Stellmittels andererseits an.

Die zweitgenannte Aufgabe wird mit einem Stellglied für eine Aufladevorrichtung, insbesondere einen Abgasturbolader, mit zumindest einem Ventilelement, insbesondere einem Wastegate, welches über eine Verbindungseinrichtung mit zumindest einem Stellmittel des Stellglieds gekoppelt und von dieser betätigbar ist, dadurch gelöst, dass der Stellstab stirnseitig eine Nut aufweist, in welcher das Koppelelement in unterschiedlichen Positionen in Richtung der Längsachse des Stellstabes und quer zur Achsrichtung festlegbar ist. Dadurch dass der Stellstab stirnseitig eine beispielsweise schlitzartige Nut aufweist, wird eine einfache axiale Einstellbarkeit der Verbindung zwischen dem Stellstab und dem stirnseitig in die Nut einführbaren Koppelelement erreicht, indem das Koppelelement bedarfsweise unterschiedlich weit in die Nut eingeführt und dort festgelegt werden kann. Zugleich wird dadurch auch eine Einstellbarkeit quer zu der Längsachse des Stellstabs ermöglicht, indem das Koppelelement in der Nut seitlich verlagert werden kann, sodass ein möglicher Versatz des Stellstabs gegenüber einem Anlenkpunkt durch diese seitliche Einstellbarkeit mühelos ausgeglichen werden kann. Somit werden also zwei Freiheitsgrade realisiert. Dies bedeutet einen wesentlich geringeren Herstellungs- und Montageaufwand, insbesondere im Vergleich zu den eingangs beschriebenen bekannten Lösungen, woraus eine Kostenreduzierung für das Stellglied resultiert. Diese Kostenreduzierung ist sowohl begründet in einer geringeren Teileanzahl als auch in einer weit weniger aufwendigen Fertigung der Komponenten der Toleranzausgleichseinrichtung.

Die Bauteiltoleranzen müssen nun nicht mehr von dem Stellmittel aufgenommen werden, was auch die Konstruktion der Stellmittel vereinfacht. Diese geht ebenfalls einher mit einer weiteren Kostenreduzierung, was die Gesamtkosten des Stellglieds um ein weiteres Maß absenkt.

An dieser Stelle sei angemerkt, dass es sich bei dem besagten Stellmittel beispielsweise um eine druckbetätigte Druckdose handeln kann. Mittels des Stellglieds ist ein Abgasturbolader und insbesondere eine Turbine des Abgasturboladers umströmbar, wodurch ein Ladedruck für eine korrespondierende Verbrennungskraftmaschine einstellbar ist.

Dabei führt das Stellmittel eine im Wesentlichen lineare Bewegung aus, welche durch die Verbindungseinrichtung in eine Drehbewegung des Ventilelements umgesetzt wird. Dadurch ist das Ventilelement betätigbar und ein Umströmungskanal zur Umströmung der Aufladevorrichtung schließ- bzw. öffenbar.

Dabei umfasst die Toleranzausgleichseinrichtung zumindest ein Koppelelement, welches über eine Steckverbindung mit zumindest einem Stabelement der Toleränzausgleichseinrichtung verbunden ist. Das bedeutet also, dass das Ventilelement über das Koppelelement und das Stabelement mit dem Stellmittel gekoppelt ist. Hierbei kann das Koppelelement derart ausgelegt werden, dass der Schwenkbereich des Koppelelements einen möglichst geringen translatorischen Weg quer zur Stabachse ergibt. Die besagte Steckverbindung zwischen dem Stabelement und dem Koppelelement erlaubt eine besonders einfache Montage ohne zusätzliches Montagewerkzeug, woraus eine sowohl kosten- als auch zeitunaufwendige Montage resultiert. Dies ist den Gesamtkosten des Stellglieds sehr zuträglich.

Um einen Bauraumbedarf insbesondere senkrecht zu der Längserstreckungsrichtung des Stabelements gering zu halten, ist die Steckverbindung im Wesentlichen senkrecht zu einer Mantelfläche des einen Koppelelements ausgebildet. Der daraus resultierende, geringe Bauraumbedarf des Stellglieds vermeidet Package-Probleme, was insbesondere in einem platzkritischen Bereich wie in einem Motorraum, in welchem das erfindungsgemäße Stellglied in der Regel eingesetzt wird, äußerst vorteilbehaftet ist.

Umfasst die Steckverbindung eine Ausnehmung, in welcher das Koppelelement bzw. Stabelement zumindest bereichsweise aufgenommen ist, so gehen damit die zuvor beschriebenen Vorteile mit dem weiteren Vorteil einher, dass dadurch eine besonders feste und stabile Verbindung zwischen dem Stabelement und dem Koppelelement realisiert ist. Dies senkt eine Ausfallwahrscheinlichkeit des für einen Betrieb der Aufladevorrichtung wichtigen Stellglieds und vermeidet unerwünschte und kostenintensive Reparaturen. Dies kommt auch dem Fahrer des Kraftwagens mit dem erfindungsgemäßen Stellglied zugute, da unerwünschte Werkstattaufenthalte vermeidbar und Serviceintervalle verlängerbar sind.

Eine besonders vorteilhafte Ausführungsform der Erfindung sieht vor, dass die Ausnehmung von einer dem Koppelelement zugewandten Seite des Stabelements her in dem zumindest einen Stabelement ausgebildet ist. Das bedeutet also, dass die Ausnehmung beispielsweise in das Stabelement von der besagten Seite her eingefräst oder bei einem Gussprozess ausgespart ist. Dies vereinfacht die Montage des Stellglieds um ein Weiteres.

Ist eine in Längserstreckungsrichtung des Stabelements, dem Koppelelement zugewandte Wandung der Ausnehmung von dem Koppelelement beabstandet, so bietet dies den Vorteil, dass dadurch die Verbindungseinrichtung nicht nur einfach und kostengünstig montierbar ist, sondern dass somit ein besonders einfacher, aber gleichzeitig effizienter Toleranzausgleich dargestellt ist. Vor der Montage ist somit das Koppelelement in das Stabelement einsteckbar und in Längserstreckungsrichtung des Stabelements verschiebbar, wodurch Toleranzen insbesondere in Längserstreckungsrichtung des Stabelements ausgleichbar sind. Der so von dem Stellmittel in den Bereich der Verbindungseinrichtung verlegte Toleranzausgleich ist damit zeit- und kostengünstig, aber nichts desto weniger auch effizient dargestellt.

Wie zuvor beschrieben weist also beispielsweise die Steckverbindung eine Ausnehmung auf, in welcher das Koppelelement zumindest bereichsweise aufgenommen ist. Eine dementsprechend umgekehrte Anordnung ist im Rahmen des erfindungsgemäßen Stellglieds aber ohne Weiteres möglich. So ist bei einer vorteilhaften Ausführungsform der Erfindung vorgesehen, dass die Steckverbindung eine Ausnehmung umfasst, in welcher das zumindest eine Stabelement zumindest bereichsweise aufgenommen ist. Somit sind also das Stabelement und das Koppelelement beispielsweise derart miteinander verbunden, dass das Stabelement in eine Ausnehmung, insbesondere ein Langloch, des Koppelelements eingesteckt und durch diese aufgenommen ist. Die in Zusammenhang mit der Aufnahme des Koppelelements in einer Ausnehmung beschriebenen Ausführungsformen und Vorteile gelten für die Aufnahme des Stabelements in einer Ausnehmung entsprechend analog. Auch dadurch ist nicht nur eine einfache und damit kostengünstige, sondern ebenso hoch effiziente Toleranzausgleichseinrichtung dargestellt.

Für beide dieser Aspekte des erfindungsgemäßen Stellglieds gilt eine weitere Ausführungsform der Erfindung als besonders vorteilhaft, bei welcher die Ausnehmung durch drei Wandungen gebildet ist und drei offene Seiten aufweist. Diese Ausbildung der Ausnehmung ermöglicht den Toleranzausgleich in zwei translatorische Richtungen durch translatorische Verschiebung beispielsweise des Koppelelements in der Ausnehmung. Die so ausgebildete Ausnehmung ermöglicht also jeweils eine Verschiebung in zwei translatorische Richtungen, wobei beispielsweise die erste translatorische Richtung in Richtung der Längserstreckungsrichtung des Stabelements und die zweite translatorische Richtung senkrecht zur Längserstreckungsrichtung des Stabelements sowie senkrecht zu einer Grundfläche des Koppelelements verlaufen. Dadurch ist eine kostengünstige, effiziente und quasi bauraumneutrale Toleranzausgleichseinrichtung geschaffen.

Ein Toleranzausgleich von rotatorischen Freiheitsgraden der Verbindungseinrichtung ist dadurch realisiert, dass bei einer besonders vorteilhaften Ausführungsform der Erfindung die Toleranzausgleichseinrichtung zumindest ein Kugelgelenk umfasst, über welches das Ventilelement mit dem Stellmittel gekoppelt ist. In Kombination mit der oben beschriebenen Ausführungsform der Ausnehmung ist dadurch ein Toleranzausgleich in zwei translatorische Richtungen und in die rotatorischen Richtungen realisiert. Ein Toleranzausgleich in die dritte verbleibende translatorische Richtung ist bei einer vorteilhaften Ausführungsform der Erfindung dadurch realisiert, dass die Toleranzausgleichseinrichtung zumindest ein zapfenförmiges Schwenkachsenelement umfasst, welches verschiebbar gelagert ist. Diese Verschiebbarkeit ist insbesondere senkrecht zu den vorbeschriebenen Richtungen, in welche der translatorische Toleranzausgleich realisiert ist, ausgebildet. Somit ist der Toleranzausgleich in alle Richtungen kostengünstig und ohne erhöhten Bauraumbedarf dargestellt.

Umfasst die Toleranzausgleichseinrichtung zumindest einen Betätigungsabschnitt, mittels welchem eine im Wesentlichen lineare Bewegung des Stabelements in eine rotatorische Bewegung des Ventilelements umsetzbar ist, so birgt die Ausbildung des Hebelements aus zwei Teilbetätigungsabschnitten, welche über schräg zur Längserstreckungsrichtung des Betätigungsabschnitts verlaufende Flächen in Wirkverbindung stehen, den Vorteil, dass dadurch auf einfache und somit sehr kostengünstige Art und Weise ein Toleranzausgleich in drei translatorische Richtungen geschaffen ist. Die schräg zur Längserstreckungsrichtung des Betätigungsabschnitts verlaufenden Flächen ermöglichen dabei einen Toleranzausgleich in zwei translatorische Richtungen, während ein Toleranzausgleich in die dritte, senkrecht zu diesen beiden translatorischen Richtungen verlaufende Richtung durch eine Materialdicke des Betätigungsabschnitts möglich ist. Diese Art des Toleranzausgleichs stellt ein Minimum an zu ändernden Bauteilen dar, was einer Kostenreduzierung des erfindungsgemäßen Stellglieds besonders zuträglich ist.

Bei einer weiteren Ausführungsform der Erfindung ist vorgesehen, dass zur festen und funktionserfüllenden Verbindung des besagten Koppelelements mit dem besagten Stabelement eine Schweißverbindung zwischen diesen beiden Elementen vorgesehen ist, wobei diese Schweißverbindung beispielsweise durch einen schonenden Schweißprozess ausgebildet wird. Ein schonender Schweißprozess meint dabei einen Schweißprozess, welcher nur einen geringen Energieeintrag in die zu verschweißenden Bauteile aufweist, um einen Verzug der Bauteile und eine daraus etwaig entstehende Toleranzabweichung zu vermeiden. Des Weiteren sind auch Verbindungstechniken wie Löten, Klemmen oder Ähnliches möglich.

Grundsätzlich könnte das Koppelelement eine nahezu beliebige Beschaffenheit aufweisen und insbesondere lediglich einen flachen in die Nut einführbaren Vorsprung aufweisen. Besonders vorteilhaft ist es hingegen, wenn das Koppelelement eine ebene Platte mit einer gegenüber der Platte vorspringenden Gelenkachse aufweist, welche ihrerseits mit dem Hebelarm des Bypassventils kinematisch gekoppelt ist.

Weiterhin erweist es sich als besonders Erfolg versprechend, wenn das Stellmittel an einer Verdichterseite und das Bypassventil an einer Turbinenseite des Abgasturboladers angeordnet sind, sodass unerwünschte thermische Belastungen des elektrischen Stellmittels weitgehend ausgeschlossen sind.

Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines Stellglieds eines Abgasturboladers,
- Fig. 2a: eine vergrößerte Ansicht eines Koppelelements des in Figur 1 gezeigten Stellglieds,
- Fig. 2b: das in Figur 2a gezeigte, mit einem Stellstab verschweißte Koppelelement in einer Draufsicht sowie in einer geschnittenen Seitenansicht,
- Fig. 3: abschnittsweise eine perspektivische Ansicht einer alternativen Ausführungsform eines Stellglieds,
- Fig. 4: abschnittsweise eine perspektivische Schnittansicht eines Stellglieds gemäß Fig. 3,
- Fig. 5: abschnittsweise eine perspektivische Ansicht einer alternativen Ausführungsform eines Stellglieds gemäß Fig. 3,
- Fig. 6: abschnittsweise eine perspektivische Schnittansicht des Stellglieds gemäß Fig. 5,
- Fig. 7: abschnittsweise eine perspektivische Ansicht einer weiteren alternativen Ausführungsform eines Stellglieds gemäß Fig. 3,
- Fig. 8: abschnittsweise eine perspektivische Schnittansicht des Stellglieds gemäß Fig. 7,
- Fig. 9: eine perspektivische Ansicht eines Abgasturboladers mit einer weiteren alternativen Ausführungsform eines Stellglieds gemäß Fig. 3,
- Fig. 10: abschnittsweise eine perspektivische Darstellung des Stellglieds gemäß Fig. 9,
- Fig. 11: abschnittsweise eine weitere perspektivische Ansicht des Stellglieds gemäß Fig. 10 und
- Fig. 12: abschnittsweise eine weitere perspektivische Ansicht des Stellglieds gemäß Fig. 10.

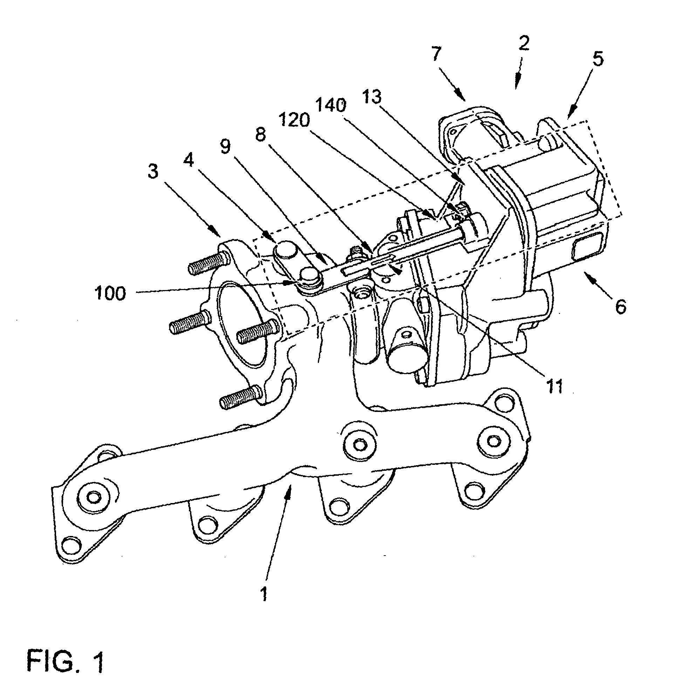

Figur 1 zeigt in einer perspektivischen Darstellung einen an einem Gehäuse 1 eines Abgaskrümmers einer nicht weiter dargestellten Brennkraftmaschine angeordneten Abgasturbolader 2. Auf der dem Gehäuse 1 zugeordneten Turbinenseite 3 des Abgasturboladers 2 ist ein Bypass für das Abgas vorgesehen, durch den mittels eines nicht weiter dargestellten Bypassventils ein einstellbarer Teilstrom des Abgases um eine nicht gezeigte Turbine des Abgasturboladers 2 herumgeführt werden kann. Das Bypassventil ist mit einem als Hebelarm ausgeführten Betätigungsabschnitt 4 unlösbar verbunden, um so die zur Einstellung des Bypassventils erforderliche Schwenkbewegung von außen einleiten zu können. Die Betätigung erfolgt mittels eines Stellglieds 5, dessen Stellmittel 6 auf einer Verdichterseite 7 des Abgasturboladers 2 angeordnet ist. Wie zu erkennen hat das Stellmittel 6 einen axial beweglichen Stellstab 8, welcher mit einem als Blech ausgeführten Koppelelement 9 verbunden ist, welches seinerseits mittels einer als Pin ausgeführten Schwenkachse 100 des Koppelelements 9 mit dem Betätigungsabschnitt 4 des Bypassventils verbunden ist. Gemeinsam bilden der Stellstab 8 und das Koppelelement 9 eine Toleranzausgleichseinrichtung. Um das Bypassventil zu schließen, wird von dem Stellmittel 6 mittels des Stellstabs 8 eine in Pfeilrichtung 11 wirkende Zugkraft aufgebracht und dadurch das Bypassventil in die geschlossene Position bewegt bzw. dort festgelegt. Um bei einer vordefinierten Ansteuerung des Stellmittels 6 die gewünschte geschlossene Position des Bypassventils zuverlässig einhalten zu können, ist das Koppelelement 9 mit dem Stellstab 8 zunächst noch verschiebbar verbunden. Daher kann in einem ersten Schritt die optimale Einstellung und in einem zweiten Schritt die endgültige relative Festlegung erfolgen. Zunächst wird zur Einstellung ein Konzentrizitätsführungswerkzeug 120 auf eine gegenüber einer Halteplatte 13 des Stellmittels 6 vorspringende Schiebeführung 140 aufgesetzt. Dadurch, dass das Konzentrizitätsführungswerkzeug 120 zugleich am Umfang des Stellstabs 8 anliegt, wird eine konzentrische Orientierung des Stellstabs 8 gegenüber der Schiebeführung 140 sichergestellt. Dies ist vorteilhaft, um den Toleranzausgleich in der Führungsbuchse des Stellmittels 6 gering zu halten.

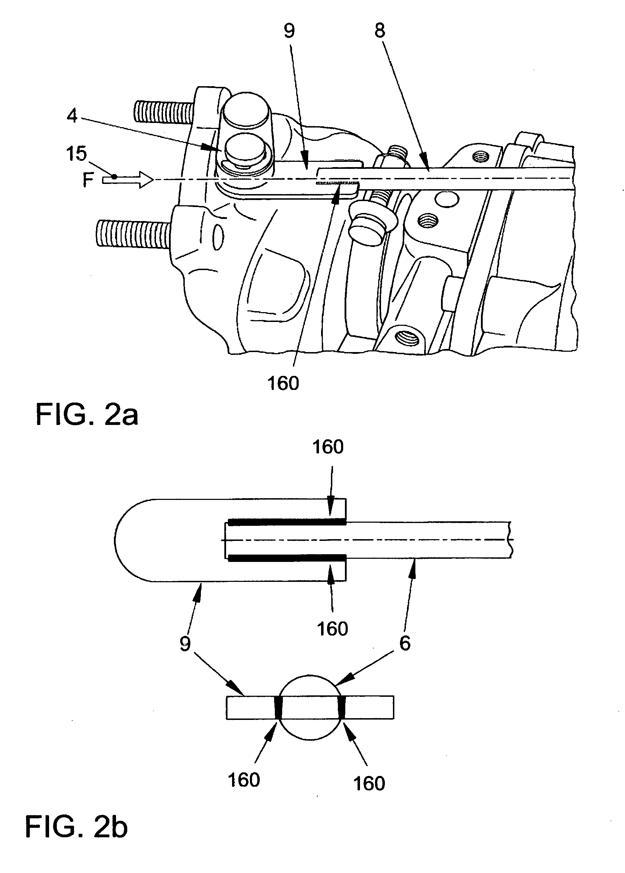

In dem anhand Figur 2a näher dargestellten nächsten Arbeitsschritt erfolgt die relative Einstellung des Koppelelements 9 gegenüber dem Stellstab 8. Abweichend von der erkennbar bereits eingebrachten, in Figur 2b dargestellten Schweißverbindung 160 der beiden Elemente sind diese zunächst zur Einstellung noch beweglich verbunden. Hierzu hat der Stellstab 8 eine stirnseitige Nut, in welche das Koppelelement 9, welches zuvor bereits mit dem Betätigungsabschnitt 4 schwenkbeweglich verbunden wurde, seitlich eingeschwenkt wird. Eine relative Beweglichkeit wird dadurch sowohl in Achsrichtung des Stellstabs 8 als auch quer zu diesem entsprechend dem Verlauf des Nutengrunds ermöglicht. Vor der Fixierung wird zunächst die der Schließposition entsprechende Stellung des Stellmittels 6 durch Anlegen der entsprechenden Spannung an das elektrische Stellmittel 6 eingestellt. Die so eingestellte Position wird abweichend von einem internen Anschlag des Stellmittels 6 gewählt, um auch bei wechselnden Betriebsbedingungen einen ausreichenden Verstellweg zu ermöglichen. Als Nächstes wird mittels eines als pneumatischer Aktuator ausgeführten Werkzeugs eine Vorspannkraft F auf das Koppelelement 9 in Pfeilrichtung 15 koaxial zu dem Stellstab 8 aufgebracht. Hierdurch wird zum einen das Bypassventil mittels des Betätigungsabschnitts 4 in die geschlossene Position gezwungen und zum anderen werden in dem System der kinematisch gekoppelten Elemente auftretende Toleranzen eliminiert, um so die Positionierungsgenauigkeit im späteren Betrieb des Abgasturboladers 2 wesentlich zu verbessern. In der so eingestellten Position wird mittels eines nicht gezeigten Schweißwerkzeugs die Schweißverbindung 160 angebracht. Die an das Stellmittel 6 angelegte elektrische Spannung wird in einem Regelkreis geregelt. Hierfür liefert ein in das Stellmittel 6 integrierter, nicht gezeigter Positionssensor eine Rückmeldung über die aktuelle Ist-Lage der Wastegateklappe bzw. des damit verbundenen Koppelelements 9. Vorgabe ist dabei die entsprechende Sensorkennlinie.

Wie in Figur 2b anhand einer Prinzipdarstellung in einer Draufsicht und einer geschnittenen Seitenansicht erkennbar wird, wird die Schweißverbindung 160 durch zwei Schweißnähte parallel zur Mittelachse des Stellstabs 6 im Kontaktbereich mit dem Koppelelement 9 eingebracht, um so das aufzuschmelzende Materialvolumen und mögliche thermische Verzüge möglichst gering zu halten. Erkennbar ist, dass die beiden Schweißverbindungen 160 durchgeschweißt sind, d. h. das Koppelelement vollständig durchsetzen. Dies erhöht die Festigkeit der so bereitgestellten Schweißverbindung deutlich.

Zeitlich nach abgeschlossener Schweißung erfolgt eine Einstellungsüberprüfung in folgender Weise. Zunächst wird das elektrische Stellmittel 6 in Richtung des geschlossenen Wastegates mit einem Schließstrom angesteuert, welcher über ein pulsweitenmoduliertes Signal (pwm-Signal) gesteuert wird, wobei dieses pwm-Signal dem in einem Motorsteuergerät applizierten entsprechen muss, damit die nominalen Kräfte, zum Beispiel im Stellstab 8, sowie ein eingestellter Adaptionswert in diesem Einstellungsüberprüfungsprozess identisch zum später laufenden Betrieb sind. Meldet der Positionssensor das Erreichen der geschlossenen Wastegate-Position, so muss der hierfür notwendige Schließstrom beziehungsweise das zugehörige pwm-Singal für eine vorbestimmte Zeit gehalten werden und die in dieser Zeit durchgeführten Messungen der Positionssensorrückmeldungen müssen innerhalb von Einstellvorgabetoleranzen liegen. Solche Einstellvorgabetoleranzen können beispielsweise im Bereich von +/- 0,05 V liegen.

In einem weiteren Schritt der Einstellungsüberprüfung wird das elektrische Stellmittel 6 mit einem vergleichsweise kleinen pwm-Signal angefahren, was einer relativ langsamen Öffnungsbewegung entspricht. Währenddessen wird am gegenüberliegenden Ende der Maßkette, das heißt im Bereich des das Koppelelement 9 mit dem Gestänge der Wastegateklappe verbindenden Pins, über einen Wegsensor, beispielsweise mittels einer Lasermessung, der sogenannte Stangenhub erfasst, das heißt die exakte Stellung des Gestänges bei nomineller Bestromung des Stellmittels 6. Der vorbeschriebene Überprüfungsprozess wird ohne das Konzentrizitätsführungswerkzeug 120 durchgeführt.

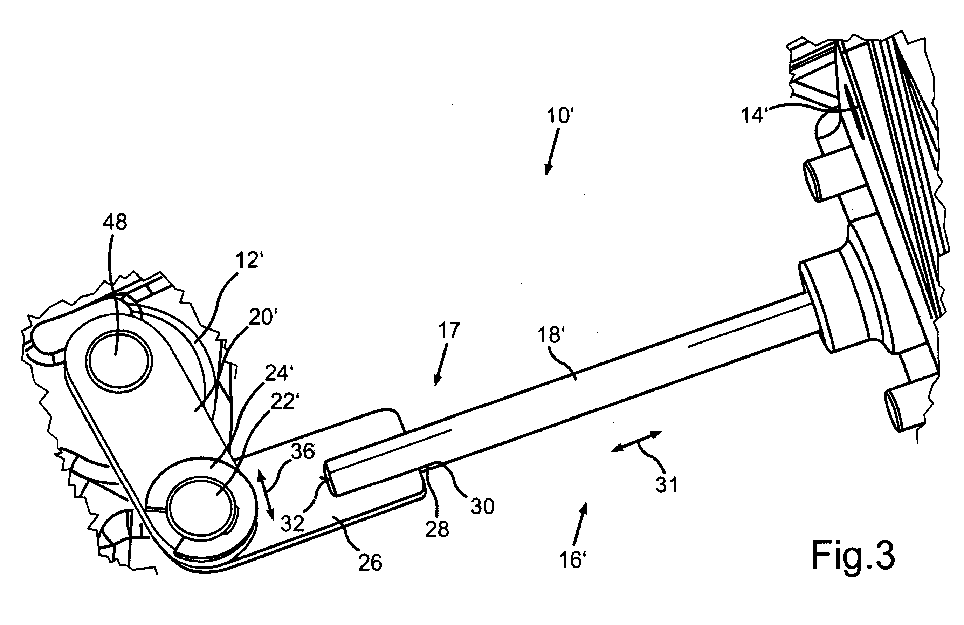

Figur 3 zeigt ein weiteres Stellglied 10' für einen Abgasturbolader, welches ein in einem Gehäuse 12' aufgenommenes Ventilelement in Form eines Wastegates umfasst. Wie bereits vorstehend näher erläutert, dient dieses Ventilelement dazu, einen Umströmungskanal zu schließen bzw. zu öffnen zur Umströmung einer Turbine des Abgasturboladers, infolgedessen ein Ladedruck für eine korrespondierende Verbrennungskraftmaschine einstellbar ist. Das Ventilelement ist dabei über eine Verbindungseinrichtung 16' mit einem Stellmittel 14' gekoppelt. Das Stellmittel 14' des Stellglieds 10' ist als Druckdose ausgeführt, welche durch Druckbeaufschlagung betätigbar ist.

Im Bereich der Verbindungseinrichtung 16' ist eine Toleranzausgleichseinrichtung 17 vorgesehen, durch welche ein Ausgleich von Toleranzen der Bauteile von dem Stellmittel 14' in den Bereich der Verbindungseinrichtung 16' verlagert ist. Dies reduziert einen Aufwand eines Toleranzausgleichs sowie des Stellmittels 14' bedeutend, wodurch eine Kostenreduzierung gegenüber dem Stand der Technik ermöglicht ist.

Die Verbindungseinrichtung 16' umfasst ein Stabelement in Form eines Stellstabs 18' sowie ein Koppelelement 26, welche über die Toleranzausgleichseinrichtung 17 miteinander verbunden sind. Dazu weist die Toleranzausgleichseinrichtung eine Ausnehmung 28 in dem Stellstab 18' auf, welche in Längserstreckungsrichtung des Stellstabs 18' gemäß einem Richtungspfeil 31 von einer dem Koppelelement 26 zugewandten Seite 32 des Stellstabs 18' her in dem Stellstab 18' ausgebildet ist. Zudem ist eine in Längserstreckung des Stellstabs 18' dem Koppelelement 26 zugewandte Wandung 30 der Ausnehmung 28 von dem Koppelelement 26 beabstandet, wodurch also ein Toleranzausgleich in eine translatorische Richtung gemäß dem Richtungspfeil 31 geschaffen ist.

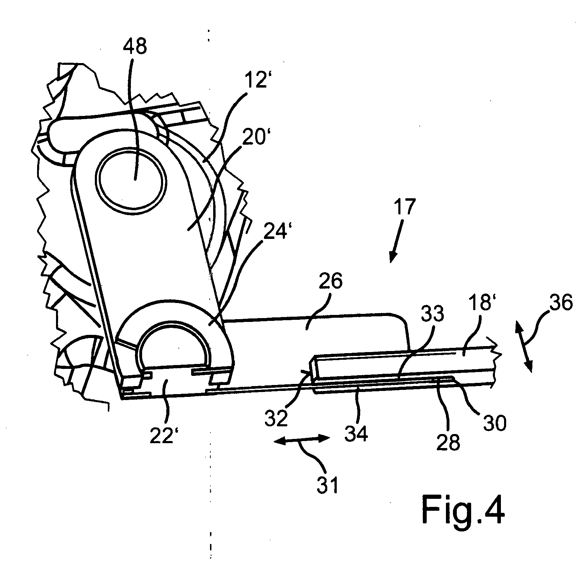

Wie insbesondere der Figur 4 zu entnehmen ist, ist die Ausnehmung 28 durch drei Wandungen 30, 33 und 34 gebildet und weist drei offene Seiten auf, wodurch also nicht nur der Toleranzausgleich in eine translatorische Richtung gemäß dem Richtungspfeil 31, sondern auch ein Toleranzausgleich in eine weitere translatorische Richtung gemäß einem Richtungspfeil 36 realisiert ist.

Das Koppelelement 26 und der Stellstab 18' sind dabei über eine Schweißverbindung miteinander verbunden.

Die Toleranzausgleichseinrichtung 17 erlaubt somit eine Kompensation von Toleranzen in Längserstreckungsrichtung des Stellstabs 18' gemäß dem Richtungspfeil 31 sowie einer seitlichen Auslenkung senkrecht dazu gemäß dem Richtungspfeil 36.

Weiterhin ist das Ventilelement mit dem Stellmittel über einen Betätigungsabschnitt 20' gekoppelt, welcher eine lineare Bewegung des Stellmittels und damit der Verbindungseinrichtung in eine rotatorische Bewegung des Ventilelements umsetzt. Die Verbindung des Betätigungsabschnitts 20' mit dem Koppelelement 26 ist dabei durch eine zapfenförmige Schwenkachse 22' dargestellt, welche durch einen Sicherungsring 24' an einem Herausrutschen aus einer korrespondierenden Bohrung des Betätigungsabschnitts 20' gehindert ist.

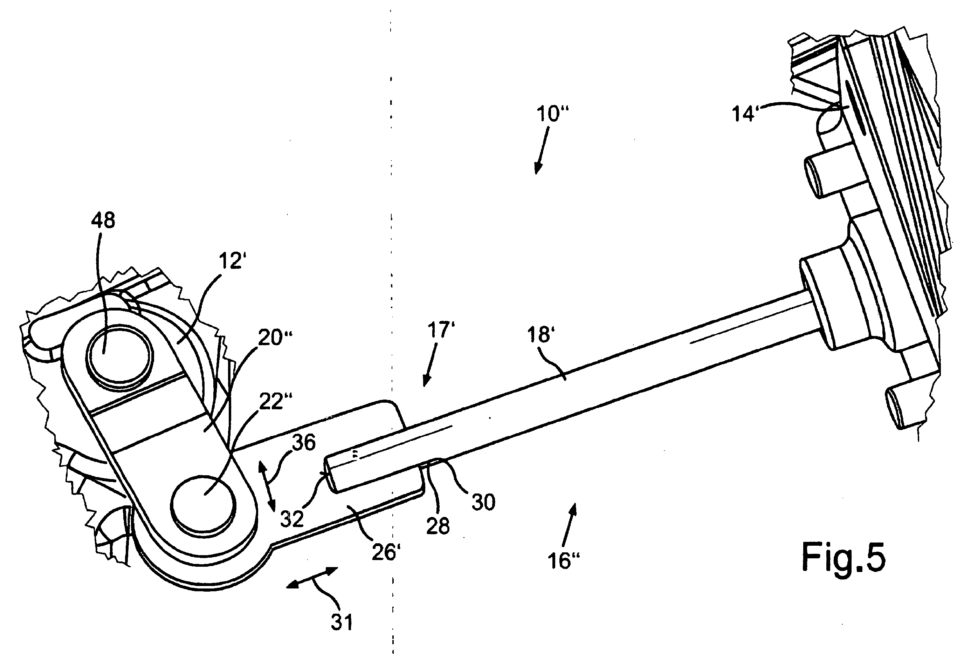

Figur 5 zeigt eine alternative Ausführungsform eines Stellglieds 10" gemäß dem Stellglied 10' in Figur 3. Der Unterschied zwischen dem Stellglied 10' und dem Stellglied 10" liegt in der Verbindungseinrichtung 16", in deren Bereich eine Toleranzausgleichseinrichtung 17' vorgesehen ist. Bei dieser Toleranzausgleichseinrichtung 17' ist nun das Koppelelement 26' mit dem Betätigungsabschnitt 20" über eine zapfenförmige Schwenkachse 22" verbunden.

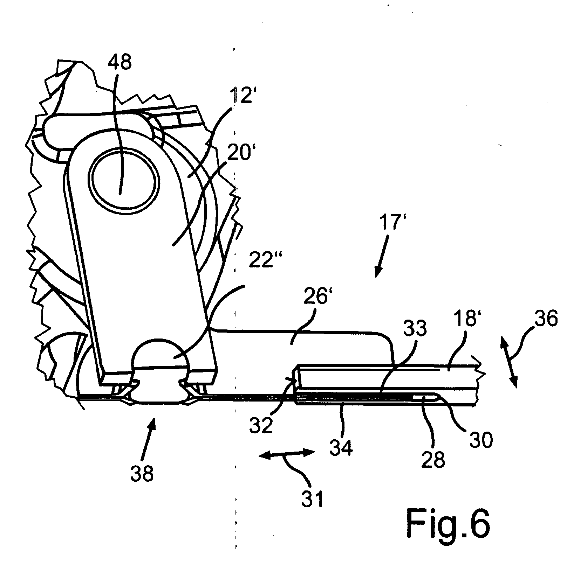

Wie insbesondere in Zusammenschau mit Figur 6 verdeutlicht wird, ist die zapfenförmige Schwenkachse 22" im Wesentlichen senkrecht zu einer Grundfläche des Koppelelements 26' verschiebbar in einer korrespondierenden Ausnehmung, insbesondere einer Bohrung, des Betätigungsabschnitts 20' gelagert. Dadurch ist ein translatorischer Toleranzausgleich in die dritte verbleibende translatorische Richtung ermöglicht. Diese translatorische Richtung liegt also senkrecht zu den translatorischen Richtungen des Toleranzausgleichs, welcher durch die Ausnehmung 28 des Stellstabs 18' ermöglicht ist.

Zudem umfasst die Toleranzausgleichseinrichtung 17' ein Kugelgelenk 38, über welches das Ventilelement mit dem Stellmittel gekoppelt ist. Das Kugelgelenk 38 erlaubt einen Toleranzausgleich in rotatorischer Art und Weise durch Freigeben von rotatorischen Freiheitsgraden der Verbindungseinrichtung bzw. der Toleranzausgleichseinrichtung 17'.

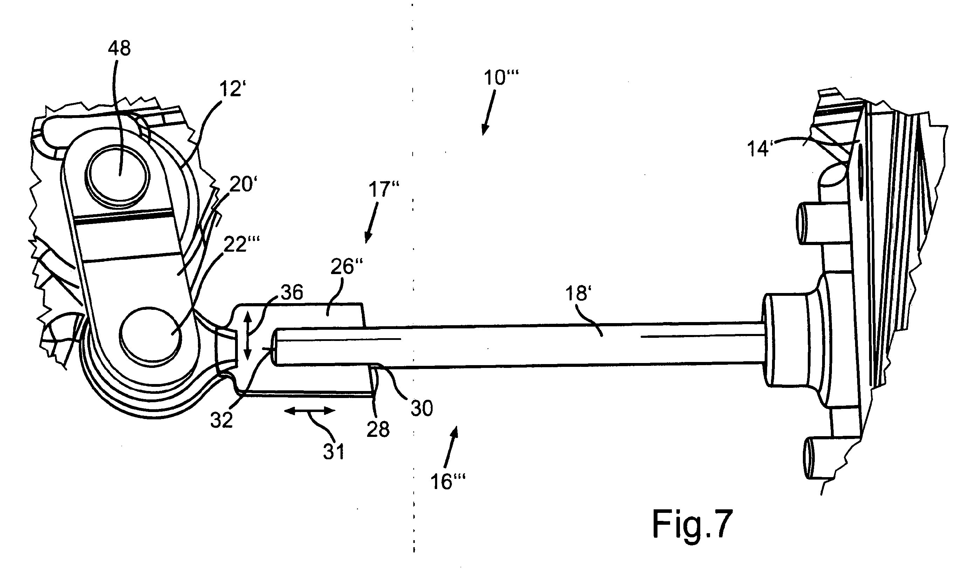

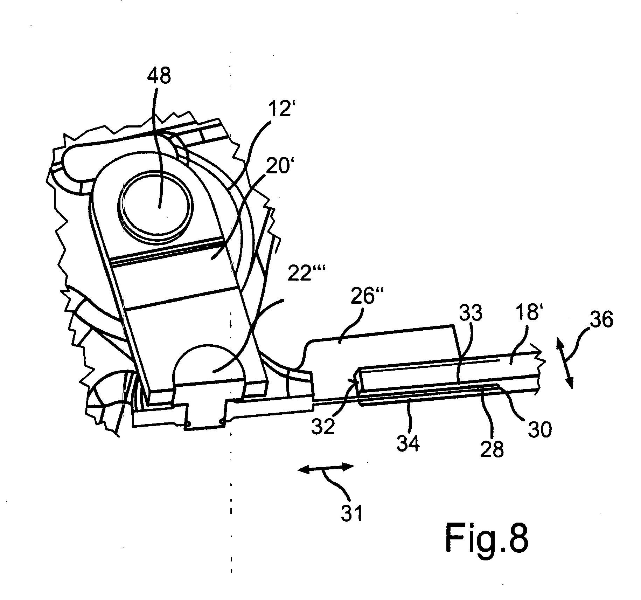

Figur 7 zeigt eine weitere alternative Ausführungsform eines Stellglieds 10"' gemäß den Figuren 3 und 5, wobei diese eine weitere alternative Ausführungsform einer Verbindungseinrichtung 16"' umfasst, bei welcher das Ventilelement mit dem Stellmittel 14' über eine Toleranzausgleichseinrichtung 17" gekoppelt ist, die eine alternative Ausführungsform eines Koppelelements 26" umfasst. Das Koppelelement 26" ist mit dem Betätigungsabschnitt 20' über eine zapfenförmige Schwenkachse 22'" verbunden, was insbesondere der Figur 8 zu entnehmen ist.

An dieser Stelle sei angemerkt, dass, sollte keine verschiebbare Lagerung der zapfenförmigen Schwenkachse 22', 22" bzw. 22'" der jeweiligen Verbindungseinrichtung 16', 16" bzw. 16"' am Betätigungsabschnitt 20' und/oder am Koppelelement 26, 26' bzw. 26" vorgesehen sein, die Schwenkachse 22', 22" bzw. 22'" über jeweils eine Schweißverbindung mit dem korrespondierenden Betätigungsabschnitt 20' und/oder mit dem korrespondierenden Koppelelement 26, 26' bzw. 26" verbunden sein kann. Diese Schweißverbindung ist ebenso wie eine gegebenenfalls vorhandene Schweißverbindung zwischen dem Koppelelement 26, 26' bzw. 26'" und dem Stellstab 18' durch ein schonendes Schweißverfahren mit einem nur geringen Wärmeeintrag durchzuführen. Vorteilhafterweise folgt die Durchführung bzw. eine Ausbildung der Schweißverbindung zwischen der Schwenkachse 22', 22" bzw. 22'" und dem korrespondierenden Betätigungsabschnitt 20' und/oder dem Koppelelement 26, 26' bzw. 26" in einem gleichen Schritt wie auch die Schweißverbindung zwischen dem Koppelelement 26, 26' bzw. 26" und dem Stellstab 18' zur Darstellung des beschriebenen Toleranzausgleichs.

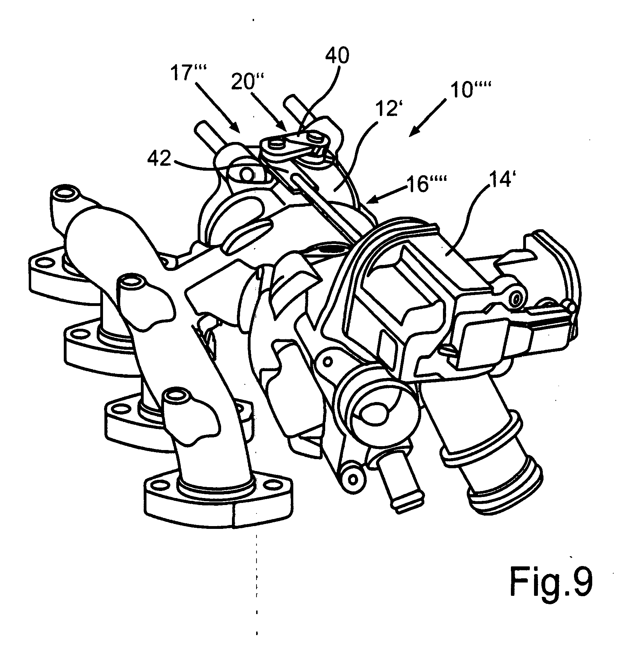

Figur 9 zeigt eine weitere alternative Ausführungsform eines Stellglieds 10"" gemäß den Figuren 3, 5 und 7, bei welcher das Ventilelement ebenso über eine Verbindungseinrichtung 16"" mit dem Stellmittel 14' verbunden ist. Die Verbindungseinrichtung 16"" unterscheidet sich dahingehend von den Verbindungseinrichtungen 16', 16" bzw. 16"', dass in ihrem Bereich eine Toleranzausgleichseinrichtung 17"' vorgesehen ist, welche eine alternative Ausführungsform eines Betätigungsabschnitts 20", welcher eine lineare Bewegung des Stellmittels 14' in eine rotatorische Bewegung des Ventilelements umsetzt, umfasst.

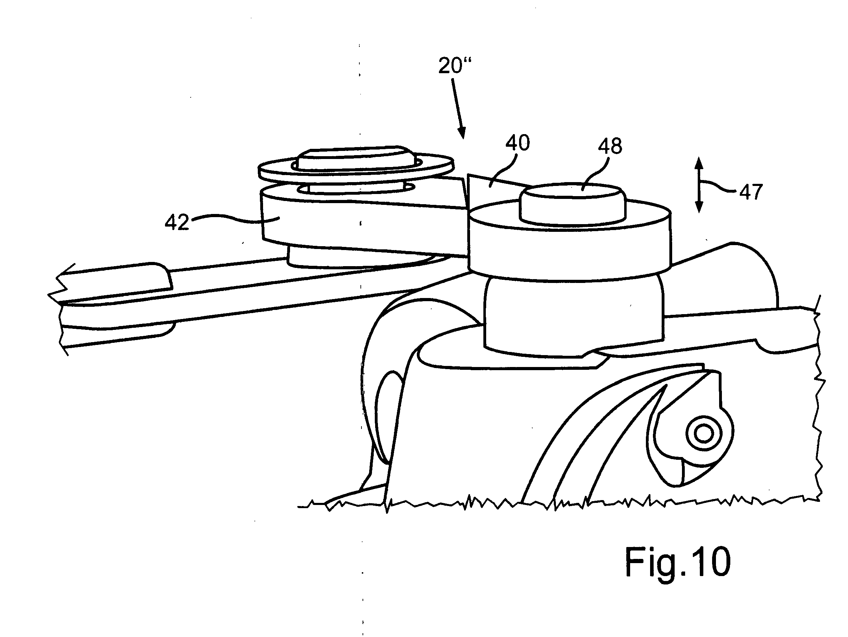

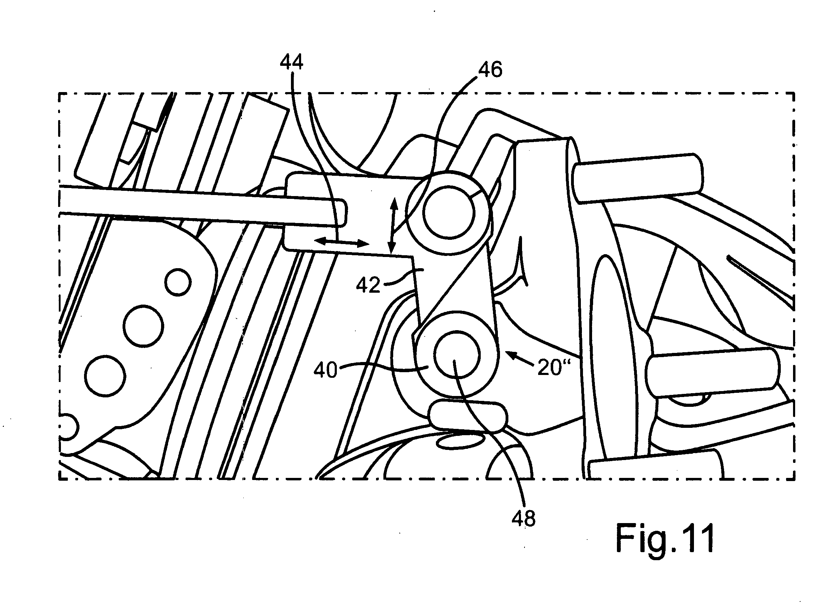

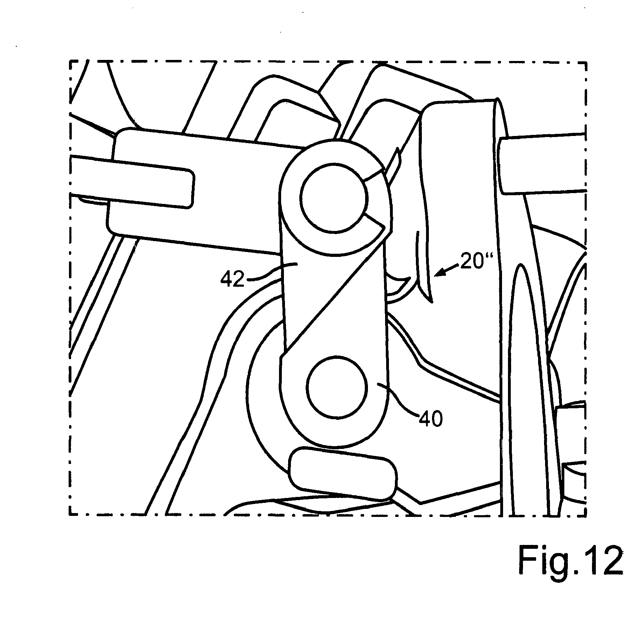

Diese alternative Ausführungsform des Betätigungsabschnitts 20" wird insbesondere in Zusammenschau mit den Figuren 10, 11 und 12 deutlich.

Der Betätigungsabschnitt 20" ist aus zwei Teilbetätigungsabschnitten 40 und 42 gebildet, welche über schräg zur Längserstreckungsrichtung des Betätigungsabschnitts 20' verlaufende Flächen in Wirkverbindung stehen. Durch diese schräg zur Längserstreckungsrichtung des Betätigungsabschnitts 20" verlaufenden Flächen ist zunächst ein Toleranzausgleich in Längserstreckungsrichtung des Betätigungsabschnitts 20" gemäß einem Richtungspfeil 46 und in einer weiteren translatorischen Richtung senkrecht dazu gemäß einem Richtungspfeil 44 ermöglicht. Ein dritter Toleranzausgleich in die dritte verbleibende translatorische Richtung gemäß einem Richtungspfeil 47 ist durch eine Materialdicke des Betätigungsabschnitts 20" darstellbar.

Zudem ist durch den Betätigungsabschnitt 20" auch ein rotatorischer Toleranzausgleich ermöglicht, was Figur 10 verdeutlicht. Zwischen dem Teilbetätigungsabschnitt 40 und dem Teilbetätigungsabschnitt 42 ist in Figur 10 ein rotatorischer Versatz von 2,2° dargestellt, der durch den Betätigungsabschnitt 20" ohne Weiteres kompensierbar ist.

Zur Verbindung des Betätigungsabschnitts 20" mit dem Ventilelement ist eine zapfenförmige Schwenkachse 48 vorgesehen, die beispielsweise mit dem Betätigungsabschnitt 20" verschweißt ist.

## Patentansprüche

1. Verfahren zur Montage und/oder Einstellung eines Stellglieds (5, 10, 10', 10", 10"', 10"") eines Abgasturboladers (2), wobei das Stellglied (5, 10, 10', 10", 10"', 10"") in kinematischer Kopplung ein der Betätigung eines Bypassventils dienendes Stellmittel (6, 14, 14'), welches einen axial beweglichen Stellstab (8, 18, 18') hat, der mittels eines Koppelelements (9, 26, 26', 26") mit einem insbesondere als Hebelarm ausgeführten Betätigungsabschnitt (4, 20, 20', 20") des Bypassventils verbunden ist, aufweist, wobei zunächst eine optimale Position des Koppelelements (9, 26, 26', 26") gegenüber dem Stellstab (8, 18, 18') in Abhängigkeit von der Position des Bypassventils und des Stellmittels (6, 14, 14') festgelegt wird und diese anschließend fixiert wird, wobei zunächst der Betätigungsabschnitt (4, 20, 20', 20") und der Stellstab (8, 18, 18') mittels des Koppelelements (9, 26, 26', 26") einstellbar verbunden werden, anschließend das Stellmittel (6, 14, 14') in eine seiner der Schließstellung entsprechenden Position verfahren wird und schließlich in der vorbestimmten relativen Position mittels eines Werkzeugs eine das Bypassventil in seiner geschlossenen Position festlegende Kraft (F) in das Stellglied (5, 10, 10', 10", 10"', 10"") eingeleitet wird und die so eingestellte Relativposition zwischen dem Betätigungsabschnitt (4, 20, 20', 20") und dem Stellstab (8, 18, 18') festgelegt wird, **dadurch gekennzeichnet, dass** das Koppelelement (9, 26, 26', 26") gegenüber dem Stellstab (8, 18, 18') zunächst mit zwei Freiheitsgraden beweglich vorpositioniert wird, anschließend die Sollposition in Achsrichtung und quer zu der Achsrichtung des Stellstabs (8, 18, 18') eingestellt wird und in der so eingestellten Position das Koppelelement (9, 26, 26', 26") mit dem Stellstab (8, 18, 18') verschweißt wird.

2. Verfahren nach Anspruch 1, **dadurch gekennzeichnet, dass** mittels des Werkzeugs eine in Achsrichtung des Stellstabs (8, 18, 18') wirkende Kraft (F) eingeleitet wird und während der Krafteinleitung die so erreichte Relativposition zwischen dem Betätigungsabschnitt (4, 20, 20', 20"), insbesondere dem Hebelarm, und dem Stellstab (8, 18, 18') festgelegt wird.

3. Verfahren nach den Ansprüchen 1 oder 2, **dadurch gekennzeichnet, dass** die mittels des Werkzeugs eingeleitete Kraft (F) in das mit dem Hebelarm des Bypassventils schwenkbeweglich verbundene Koppelelement (9, 26, 26', 26") eingeleitet wird.

4. Verfahren nach zumindest einem der vorangehenden Ansprüche, **dadurch gekennzeichnet, dass** das Stellmittel (6, 14, 14') vor der Festlegung der Relativposition zwischen dem Hebelarm und dem Stellstab (8, 18, 18') durch eine elektrische Ansteuerung des elektrischen Antriebs des Stellmittels (6, 14, 14') in eine Sollposition verfahren wird.

5. Verfahren nach zumindest einem der vorangehenden Ansprüche, **dadurch gekennzeichnet, dass** das Koppelelement (9, 26, 26', 26") mit dem Stellstab (8, 18, 18') durch eine Laserschweißverbindung verbunden wird.

6. Verfahren nach zumindest einem der vorangehenden Ansprüche, **dadurch gekennzeichnet, dass** der zu schweißende Bereich während des Schweißens gekühlt wird.

7. Verfahren nach zumindest einem der vorangehenden Ansprüche, **dadurch gekennzeichnet, dass** mittels eines Wegsensors eine Überprüfung der Ist-Position zur Soll-Position des Stellstabs (8, 18, 18') durchgeführt wird.

8. Verfahren nach zumindest einem der vorangehenden Ansprüche, **dadurch gekennzeichnet, dass** mittels eines Konzentrizitätsführungswerkzeugs (120) eine Auslenkung des Stellstabs (8, 18, 18') aus seiner Sollachse während der Montage oder Einstellung vermieden wird.

9. Stellglied (5, 10, 10', 10", 10"', 10"") für eine Aufladevorrichtung, insbesondere einen Abgasturbolader (2), mit zumindest einem Ventilelement, insbesondere einem Wastegate, welches über eine Verbindungseinrichtung (16, 16', 16", 16"', 16"") mit zumindest einem Stellmittel (6, 14, 14') des Stellglieds (5, 10, 10', 10", 10"', 10"") gekoppelt und von diesem betätigbar ist, wobei im Bereich der Verbindungseinrichtung (16, 16', 16", 16"', 16"") eine Toleranzausgleichseinrichtung (17, 17', 17", 17"') vorgesehen ist, die zumindest ein Koppelelement (9, 26, 26', 26") umfasst, welches über eine Steckverbindung mit zumindest einem Stellstab (18, 18') der Toleranzausgleichseinrichtung (17, 17', 17", 17"') verbunden ist, wobei die Steckverbindung im Wesentlichen senkrecht zu einer Mantelfläche des Koppelelements (9, 26, 26', 26") ausgebildet ist, **dadurch gekennzeichnet, dass** der Stellstab (8, 18, 18') stirnseitig eine Nut aufweist, in welcher das Koppelelement (9, 26, 26', 26") in unterschiedlichen Positionen in Richtung der Längsachse des Stellstabs (8, 18, 18') und quer zur Achsrichtung festlegbar ist.

10. Stellglied (5, 10, 10', 10", 10"', 10"") nach Anspruch 9, **dadurch gekennzeichnet, dass** die Steckverbindung eine Ausnehmung (28) umfasst, in welcher das Koppelelement (9, 26, 26', 26") zumindest bereichsweise aufgenommen ist und die Ausnehmung (28) von einer dem Koppelelement (9, 26, 26', 26") zugewandten Seite (32) des Stellstabs (18, 18') her in dem Stellstab (18, 18') ausgebildet ist.

11. Stellglied (5, 10, 10', 10", 10"', 10"") nach Anspruch 9 oder 10, **dadurch gekennzeichnet, dass** eine in Längserstreckungsrichtung des Stellstabs (18, 18') dem Koppelelement (9, 26, 26', 26") zugewandte Wandung (30) der Ausnehmung (28) von dem Koppelelement (9, 26, 26', 26") beabstandet ist.

12. Stellglied (5, 10, 10', 10", 10"', 10"") nach zumindest einem der Ansprüche 9 bis 11, **dadurch gekennzeichnet, dass** die Steckverbindung eine Ausnehmung (28) umfasst, in welcher der Stellstab (18, 18') zumindest bereichsweise aufgenommen ist.

13. Stellglied (5, 10, 10', 10", 10"', 10"") nach zumindest einem der Ansprüche 9 bis 11, **dadurch gekennzeichnet, dass** die Ausnehmung (28) von einer dem Stellstab (18, 18') zugewandten Seite des Koppelelements (9, 26, 26', 26") her in dem Koppelelement (9, 26, 26', 26") ausgebildet ist.

14. Stellglied (5, 10, 10', 10", 10"', 10"") nach zumindest einem der Ansprüche 9 bis 13, **dadurch gekennzeichnet, dass** eine in Längserstreckungsrichtung des Stellstabs (18, 18') dem Koppelelement (9, 26, 26', 26") zugewandte Wandung der Ausnehmung (28) von dem Stellstab (18, 18') beabstandet ist.

15. Stellglied (5, 10, 10', 10", 10"', 10"") nach zumindest einem der Ansprüche 9 bis 14, **dadurch gekennzeichnet, dass** die Ausnehmung (28) durch drei Wandungen (30, 33, 34) gebildet ist und drei offene Seiten aufweist.

16. Stellglied (5, 10, 10', 10", 10"', 10"") nach zumindest einem der Ansprüche 9 bis 15, **dadurch gekennzeichnet, dass** die Toleranzausgleichseinrichtung (17, 17', 17", 17"') zumindest ein Kugelgelenk (38) umfasst.

17. Stellglied (5, 10, 10', 10", 10"', 10"") nach zumindest einem der Ansprüche 9 bis 16, **dadurch gekennzeichnet, dass** die Toleranzausgleichseinrichtung (17, 17', 17", 17"') zumindest einen Betätigungsabschnitt (4, 20, 20', 20") umfasst, mittels welchem eine im Wesentlichen lineare Bewegung des Stellstabs (18, 18') in eine rotatorische Bewegung des Ventilelements umsetzbar ist.

18. Stellglied (5, 10, 10', 10", 10"', 10"") nach zumindest einem der Ansprüche 9 bis 17, **dadurch gekennzeichnet, dass** der Betätigungsabschnitt (4, 20, 20', 20") aus zwei Teilbetätigungsabschnitten (40, 42) gebildet ist, welche über schräg zur Längserstreckungsrichtung des Betätigungsabschnitts (4, 20, 20', 20") verlaufende Flächen in Wirkverbindung stehen.

19. Stellglied (5, 10, 10', 10", 10"', 10"") nach zumindest einem der Ansprüche 9 bis 18, **dadurch gekennzeichnet, dass** die Toleranzausgleichseinrichtung (17, 17', 17", 17"') zumindest ein insbesondere zapfenförmiges Schwenkachsenelement (22, 22', 22", 22"') umfasst, welches verschiebbar gelagert ist.

20. Stellglied (5, 10, 10', 10", 10"', 10"") nach zumindest einem der Ansprüche 9 bis 19, **dadurch gekennzeichnet, dass** das Schwenkachsenelement (22, 22', 22", 22"') im Wesentlichen senkrecht zu einer Grundfläche des Koppelelements (9, 26, 26', 26") verschiebbar gelagert ist.

21. Stellglied (5, 10, 10', 10", 10"', 10"") nach zumindest einem der Ansprüche 9 bis 20, **dadurch gekennzeichnet, dass** die Toleranzausgleichseinrichtung (17, 17', 17", 17"') zumindest ein zapfenförmiges Schwenkachsenelement (22, 22', 22", 22"') umfasst, welches über eine Steckverbindung mit dem Koppelelement (9, 26, 26', 26") und/oder mit einem Betätigungsabschnitt (4, 20, 20', 20") der Toleranzausgleichseinrichtung (17, 17', 17", 17"') verbunden ist.

22. Stellglied (5, 10, 10', 10", 10"', 10"") nach zumindest einem der Ansprüche 9 bis 21, **dadurch gekennzeichnet, dass** die Steckverbindung des zapfenförmigen Schwenkachsenelements (22, 22', 22", 22"') im Wesentlichen senkrecht zu einer Grundfläche des Koppelelements (9, 26, 26', 26") ausgebildet ist.

23. Stellglied (5, 10, 10', 10", 10"', 10"") nach zumindest einem der Ansprüche 9 bis 22, **dadurch gekennzeichnet, dass** das zapfenförmige Schwenkachseelement (22, 22', 22", 22"') über jeweils eine Schweißverbindung mit dem Koppelelement (9, 26, 26', 26") und/oder mit dem Betätigungsabschnitt (18, 18') verbunden ist.

24. Stellglied (5, 10, 10', 10", 10"', 10"") nach zumindest einem der Ansprüche 9 bis 23, **dadurch gekennzeichnet, dass** der Stellstab (18, 18') über eine Schweißverbindung mit dem Koppelelement (9, 26, 26', 26") verbunden ist.

25. Stellglied (5) nach zumindest einem der Ansprüche 9 bis 24, **dadurch gekennzeichnet, dass** das Stellglied (5) ein elektrisches Stellmittel (6) aufweist

26. Stellglied (5, 10, 10', 10", 10"', 10"") nach zumindest einem der Ansprüche 9 bis 25, **dadurch gekennzeichnet, dass** das Stellmittel (6, 14, 14') an einer Verdichterseite (7) und das Bypassventil an einer Turbinenseite (3) des Abgasturboladers (2) angeordnet sind.

## Claims

1. Method for mounting and/or setting an actuator (5, 10, 10', 10'', 10''', 10'''') of an exhaust gas turbocharger (2), the actuator (5, 10, 10', 10'', 10''', 10'''') having, in a kinematic coupling, an actuating means (6, 14, 14') which serves to actuate a bypass valve and has an axially movable actuating rod (8, 18, 18') which is connected by means of a coupling element (9, 26, 26', 26'') to an actuation section (4, 20, 20', 20'') of the bypass valve, which actuation section (4, 20, 20', 20'') is configured, in particular, as a lever arm, first of all an optimum position of the coupling element (9, 26, 26', 26'') with respect to the actuating rod (8, 18, 18') being determined depending on the position of the bypass valve and the actuating means (6, 14, 14') and said optimum position subsequently being fixed, first of all the actuation section (4, 20, 20', 20") and the actuating rod (8, 18, 18') being connected adjustably by means of the coupling element (9, 26, 26', 26''), subsequently the actuating means (6, 14, 14') being moved into a position which corresponds to its closed position, and finally, in the predefined relative position, a force (F) which immobilizes the bypass valve in its closed position being introduced into the actuator (5, 10, 10', 10'', 10''', 10'''') by means of a tool and the relative position set in this way between the actuation section (4, 20, 20', 20'') and the actuating rod (8, 18, 18') being immobilized, **characterized in that** the coupling element (9, 26, 26', 26'') is first of all prepositioned movably with two degrees of freedom with respect to the actuating rod (8, 18, 18'), subsequently the setpoint position is set in the axial direction and transversely with respect to the axial direction of the actuating rod (8, 18, 18') and the coupling element (9, 26, 26', 26") is welded to the actuating rod (8, 18, 18') in the position which is set in this way.

2. Method according to Claim 1, **characterized in that** a force (F) which acts in the axial direction of the actuating rod (8, 18, 18') is introduced by means of the tool and, during the introduction of the force, the relative position which is reached in this way between the actuation section (4, 20, 20', 20"), in particular the lever arm, and the actuating rod (8, 18, 18') is immobilized.

3. Method according to Claim 1 or 2, **characterized in that** the force (F) which is introduced by means of the tool is introduced into the coupling element (9, 26, 26', 26") which is connected in a pivotably movable manner to the lever arm of the bypass valve.

4. Method according to at least one of the preceding claims, **characterized in that**, before the immobilization of the relative position between the lever arm and the actuating rod (8, 18, 18'), the actuating means (6, 14, 14') is moved into a setpoint position by electric actuation of the electric drive of the actuating means (6, 14, 14').

5. Method according to at least one of the preceding claims, **characterized in that** the coupling element (9, 26, 26', 26'') is connected to the actuating rod (8, 18, 18') by way of a laser welded joint.

6. Method according to at least one of the preceding claims, **characterized in that** the region to be welded is cooled during the welding.

7. Method according to at least one of the preceding claims, **characterized in that** a test of the actual position with respect to the setpoint position of the actuating rod (8, 18, 18') is carried out by means of a displacement sensor.

8. Method according to at least one of the preceding claims, **characterized in that** a deflection of the actuating rod (8, 18, 18') out of its setpoint axis during mounting or setting is avoided by means of a concentricity guiding tool (120).

9. Actuator (5, 10, 10', 10'', 10''', 10'''') for a supercharging device, in particular an exhaust gas turbocharger (2), having at least one valve element, in particular a wastegate, which is coupled via a connecting device (16, 16', 16'', 16''', 16'''') to at least one actuating means (6, 14, 14') of the actuator (5, 10, 10', 10'', 10''', 10'''') and can be actuated by the latter, a tolerance compensation device (17, 17', 17'', 17''') being provided in the region of the connecting device (16, 16', 16'', 16''', 16''''), which tolerance compensation device (17, 17', 17", 17''') comprises at least one coupling element (9, 26, 26', 26") which is connected via a push-in connection to at least one actuating rod (18, 18') of the tolerance compensation device (17, 17', 17'', 17'''), the push-in connection being configured substantially perpendicularly with respect to a circumferential face of the coupling element (9, 26, 26', 26''), **characterized in that** the actuating rod (8, 18, 18') has a groove on the end side, in which groove the coupling element (9, 26, 26', 26") can be immobilized in different positions in the direction of the longitudinal axis of the actuating rod (8, 18, 18') and transversely with respect to the axial direction.

10. Actuator (5, 10, 10', 10", 10''', 10'''') according to Claim 9, **characterized in that** the push-in connection comprises a recess (28), in which the coupling element (9, 26, 26', 26'') is received at least in regions, and the recess (28) is formed in the actuating rod (18, 18') from a side (32) of the actuating rod (18, 18'), which side (32) faces the coupling element (9, 26, 26', 26'').

11. Actuator (5, 10, 10', 10", 10''', 10'''') according to Claim 9 or 10, **characterized in that** a wall (30) of the recess (28) is spaced apart from the coupling element (9, 26, 26', 26''), which wall (30) faces the coupling element (9, 26, 26', 26") in the direction of the longitudinal extent of the actuating rod (18, 18').

12. Actuator (5, 10, 10', 10'', 10''', 10'''') according to at least one of Claims 9 to 11, **characterized in that** the push-in connection comprises a recess (28), in which the actuating rod (18, 18') is received at least in regions.

13. Actuator (5, 10, 10', 10'', 10''', 10'''') according to at least one of Claims 9 to 11, **characterized in that** the recess (28) is formed in the coupling element (9, 26, 26', 26'') from a side of the coupling element (9, 26, 26', 26''), which side faces the actuating rod (18, 18').

14. Actuator (5, 10, 10', 10'', 10''', 10'''') according to at least one of Claims 9 to 13, **characterized in that** a wall of the recess (28) is spaced apart from the actuating rod (18, 18'), which wall faces the coupling element (9, 26, 26', 26'') in the direction of the longitudinal extent of the actuating rod (18, 18').

15. Actuator (5, 10, 10', 10'', 10''', 10'''') according to at least one of Claims 9 to 14, **characterized in that** the recess (28) is formed by three walls (30, 33, 34) and has three open sides.

16. Actuator (5, 10, 10', 10", 10''', 10'''') according to at least one of Claims 9 to 15, **characterized in that** the tolerance compensation device (17, 17', 17'', 17''') comprises at least one ball joint (38).

17. Actuator (5, 10, 10', 10", 10''', 10'''') according to at least one of Claims 9 to 16, **characterized in that** the tolerance compensation device (17, 17', 17'', 17''') comprises at least one actuation section (4, 20, 20', 20"), by means of which a substantially linear movement of the actuating rod (18, 18') can be converted into a rotational movement of the valve element.

18. Actuator (5, 10, 10', 10'', 10''', 10'''') according to at least one of Claims 9 to 17, **characterized in that** the actuation section (4, 20, 20', 20") is formed from two part actuation sections (40, 42) which are in operative connection via faces which extend obliquely with respect to the direction of the longitudinal extent of the actuation section (4, 20, 20', 20'').

19. Actuator (5, 10, 10', 10", 10''', 10'''') according to at least one of Claims 9 to 18, **characterized in that** the tolerance compensation device (17, 17', 17", 17''') comprises at least one, in particular journal-shaped, pivot pin element (22, 22', 22", 22''') which is mounted displaceably.

20. Actuator (5, 10, 10', 10'', 10''', 10'''') according to at least one of Claims 9 to 19, **characterized in that** the pivot pin element (22, 22', 22'', 22''') is mounted such that it can be displaced substantially perpendicularly with respect to a base area of the coupling element (9, 26, 26', 26'').

21. Actuator (5, 10, 10', 10'', 10''', 10'''') according to at least one of Claims 9 to 20, **characterized in that** the tolerance compensation device (17, 17', 17'', 17''') comprises at least one journal-shaped pivot pin element (22, 22', 22", 22''') which is connected via a push-in connection to the coupling element (9, 26, 26', 26'') and/or to an actuation section (4, 20, 20', 20") of the tolerance compensation device (17, 17', 17'', 17''').

22. Actuator (5, 10, 10', 10'', 10''', 10'''') according to at least one of Claims 9 to 21, **characterized in that** the push-in connection of the journal-shaped pivot pin element (22, 22', 22", 22''') is configured substantially perpendicularly with respect to a base area of the coupling element (9, 26, 26', 26'').

23. Actuator (5, 10, 10', 10", 10''', 10'''') according to at least one of Claims 9 to 22, **characterized in that** the journal-shaped pivot pin element (22, 22' , 22'', 22''') is connected via in each case one welded joint to the coupling element (9, 26, 26', 26") and/or to the actuation section (4, 20, 20', 20'').

24. Actuator (5, 10, 10', 10'', 10''', 10'''') according to at least one of Claims 9 to 23, **characterized in that** the actuating rod (18, 18') is connected via a welded joint to the coupling element (9, 26, 26', 26'').

25. Actuator (5) according to at least one of Claims 9 to 24, **characterized in that** the actuator (5) has an electric actuating means (6).

26. Actuator (5, 10, 10', 10'', 10''', 10'''') according to at least one of Claims 9 to 25, **characterized in that** the actuating means (6, 14, 14') is arranged on a compressor side (7) and the bypass valve is arranged on a turbine side (3) of the exhaust gas turbocharger (2).

## Revendications

1. Procédé pour le montage et/ou le réglage d'un organe de réglage (5, 10, 10', 10", 10'", 10"") d'un turbocompresseur à gaz d'échappement (2), dans lequel l'organe de réglage (5, 10, 10', 10", 10'", 10"") présente en couplage cinématique un moyen de réglage (6, 14, 14') servant pour l'actionnement d'une soupape de dérivation et qui comporte une tige de réglage (8, 18, 18') mobile axialement, qui est reliée au moyen d'un élément de couplage (9, 26, 26', 26") à une section d'actionnement (4, 20, 20', 20") de la soupape de dérivation réalisée en particulier sous forme de bras de levier, dans lequel on détermine d'abord une position optimale de l'élément de couplage (9, 26, 26', 26") par rapport à la tige de réglage (8, 18, 18') en fonction de la position de la soupape de dérivation et du moyen de réglage (6, 14, 14') puis on la fixe, dans lequel d'abord on relie la section d'actionnement (4, 20, 20', 20") et la tige de réglage (8, 18, 18') de façon réglable au moyen de l'élément de couplage (9, 26, 26', 26"), puis on déplace le moyen de réglage (6, 14, 14') dans une position correspondant à sa position de fermeture et enfin on introduit dans l'organe de réglage (5, 10, 10', 10", 10'", 10""), dans la position relative prédéterminée, au moyen d'un outil, une force (F) calant la soupape de dérivation dans sa position fermée et on cale la position relative ainsi réglée entre la section d'actionnement (4, 20, 20', 20") et la tige de réglage (8, 18, 18'), **caractérisé en ce que** l'on prépositionne d'abord l'élément de couplage (9, 26, 26', 26") par rapport à la tige de réglage (8, 18, 18') de façon mobile avec deux degrés de liberté, ensuite on règle la position de consigne en direction axiale et transversalement à la direction axiale de la tige de réglage (8, 18, 18') et on soude l'élément de couplage (9, 26, 26', 26") avec la tige de réglage (8, 18, 18') dans la position ainsi réglée.

2. Procédé selon la revendication 1, **caractérisé en ce que** l'on introduit au moyen d'un outil une force (F) agissant en direction axiale de la tige de réglage (8, 18, 18') et on fixe, pendant l'introduction de la force, la position relative ainsi atteinte entre la section d'actionnement (4, 20, 20', 20"), en particulier le bras de levier, et la tige de réglage (8, 18, 18').

3. Procédé selon les revendications 1 ou 2, **caractérisé en ce que** l'on introduit la force (F) introduite au moyen de l'outil dans l'élément de couplage (9, 26, 26', 26") relié de façon pivotante au bras de levier de la soupape de dérivation.

4. Procédé selon au moins une des revendications précédentes, **caractérisé en ce que**, avant la fixation de la position relative entre le bras de levier et la tige de réglage (8, 18, 18'), on déplace le moyen de réglage (6, 14, 14') dans une position de consigne au moyen d'une commande électrique de l'entraînement électrique du moyen de réglage (6, 14, 14').

5. Procédé selon au moins une des revendications précédentes, **caractérisé en ce que** l'on assemble l'élément de couplage (9, 26, 26', 26") à la tige de réglage (8, 18, 18') au moyen d'un assemblage soudé au laser.

6. Procédé selon au moins une des revendications précédentes, **caractérisé en ce que** l'on refroidit la zone à souder pendant le soudage.

7. Procédé selon au moins une des revendications précédentes, **caractérisé en ce que** l'on effectue un contrôle de la position réelle par rapport à la position de consigne de la tige de réglage (8, 18, 18') au moyen d'un détecteur de course.

8. Procédé selon au moins une des revendications précédentes, **caractérisé en ce que** l'on évite une déviation de la tige de réglage (8, 18, 18') par rapport à son axe de consigne pendant le montage ou le réglage au moyen d'un outil de guidage de la concentricité (120).

9. Organe de réglage (5, 10, 10', 10", 10'", 10"") pour un dispositif de suralimentation, en particulier un turbocompresseur à gaz d'échappement (2), avec au moins un élément de soupape, en particulier une vanne, qui est couplé par un dispositif de raccordement (16, 16', 16", 16"', 16"") à au moins un moyen de réglage (6, 14, 14') de l'organe de réglage (5, 10, 10', 10", 10"', 10"") et qui peut être actionné par celui-ci, dans lequel il est prévu dans la région du dispositif de raccordement (16, 16', 16", 16"', 16"") un dispositif de compensation de tolérance (17, 17', 17", 17'") qui comprend au moins un élément de couplage (9, 26, 26', 26"), qui est relié par une connexion par fiche à au moins une tige de réglage (18, 18') du dispositif de compensation de tolérance (17, 17', 17", 17'"), dans lequel la connexion par fiche est essentiellement perpendiculaire à une surface latérale de l'élément de couplage (9, 26, 26', 26"), **caractérisé en ce que** la tige de réglage (8, 18, 18') présente frontalement une rainure dans laquelle l'élément de couplage (9, 26, 26', 26") peut être calé dans différentes positions dans la direction de l'axe longitudinal de la tige de réglage (8, 18, 18') et transversalement à la direction de l'axe.

10. Organe de réglage (5, 10, 10', 10", 10'", 10"") selon la revendication 9, **caractérisé en ce que** la connexion par fiche présente un creux (28), dans lequel l'élément de couplage (9, 26, 26', 26") est au moins en partie logé et le creux (28) est formé dans la tige de réglage (18, 18') à partir d'un côté (32) de la tige de réglage (18, 18') tourné vers l'élément de couplage (9, 26, 26', 26").

11. Organe de réglage (5, 10, 10', 10", 10'", 10"") selon la revendication 9 ou 10, **caractérisé en ce qu'**une paroi (30) du creux (28), tournée vers l'élément de couplage (9, 26, 26', 26") dans la direction d'extension longitudinale de la tige de réglage (18, 18'), est espacée de l'élément de couplage (9, 26, 26', 26").

12. Organe de réglage (5, 10, 10', 10", 10'", 10"") selon au moins une des revendications 9 à 11, **caractérisé en ce que** la connexion par fiche comprend un creux (28), dans lequel la tige de réglage (18, 18') est logée au moins localement.

13. Organe de réglage (5, 10, 10', 10", 10'", 10"") selon au moins une des revendications 9 à 11, **caractérisé en ce que** le creux (28) est formé dans l'élément de couplage (9, 26, 26', 26") à partir d'un côté de l'élément de couplage (9, 26, 26', 26") tourné vers la tige de réglage (18, 18').

14. Organe de réglage (5, 10, 10', 10", 10'", 10"") selon au moins une des revendications 9 à 13, **caractérisé en ce qu'**une paroi du creux (28), tournée vers l'élément de couplage (9, 26, 26', 26") dans la direction d'extension longitudinale de la tige de réglage (18, 18'), est espacée de la tige de réglage (18, 18').

15. Organe de réglage (5, 10, 10', 10", 10"', 10"") selon au moins une des revendications 9 à 14, **caractérisé en ce que** le creux (28) est formé par trois parois (30, 33, 34) et présente trois côtés ouverts.

16. Organe de réglage (5, 10, 10', 10", 10'", 10"") selon au moins une des revendications 9 à 15, **caractérisé en ce que** le dispositif de compensation de tolérance (17, 17', 17", 17"') comprend au moins une rotule (38).

17. Organe de réglage (5, 10, 10', 10", 10'", 10"") selon au moins une des revendications 9 à 16, **caractérisé en ce que** le dispositif de compensation de tolérance (17, 17', 17", 17'") comprend au moins une section d'actionnement (4, 20, 20', 20"), au moyen de laquelle un mouvement essentiellement linéaire de la tige de réglage (18, 18') peut être converti en un mouvement de rotation de l'élément de soupape.

18. Organe de réglage (5, 10, 10', 10", 10'", 10"") selon au moins une des revendications 9 à 17, **caractérisé en ce que** la section d'actionnement (4, 20, 20', 20") est formée de deux sections d'actionnement partielles (40, 42), qui sont en liaison active par l'intermédiaire de faces s'étendant en oblique par rapport à la direction d'extension longitudinale de la section d'actionnement (4, 20, 20', 20").

19. Organe de réglage (5, 10, 10', 10", 10'", 10"") selon au moins une des revendications 9 à 18, **caractérisé en ce que** le dispositif de compensation de tolérance (17, 17', 17", 17"') comprend au moins un élément d'axe de pivotement (22, 22', 22", 22'") en particulier en forme de tourillon, qui est monté de façon déplaçable.

20. Organe de réglage (5, 10, 10', 10", 10'", 10"") selon au moins une des revendications 9 à 19, **caractérisé en ce que** l'élément d'axe de pivotement (22, 22', 22", 22'") est monté de façon déplaçable essentiellement perpendiculairement à une face de base de l'élément de couplage (9, 26, 26', 26").

21. Organe de réglage (5, 10, 10', 10", 10'", 10"") selon au moins une des revendications 9 à 20, **caractérisé en ce que** le dispositif de compensation de tolérance (17, 17', 17", 17"') comprend au moins un élément d'axe de pivotement en forme de tourillon (22, 22', 22", 22'"), qui est relié par l'intermédiaire d'une connexion par fiche à l'élément de couplage (9, 26, 26', 26") et/ou à la section d'actionnement (4, 20, 20', 20") du dispositif de compensation de tolérance (17, 17', 17", 17'").

22. Organe de réglage (5, 10, 10', 10", 10'", 10"") selon au moins une des revendications 9 à 21, **caractérisé en ce que** la connexion par fiche de l'élément d'axe de pivotement en forme de tourillon (22, 22', 22", 22'") est essentiellement perpendiculaire à une face de base de l'élément de couplage (9, 26, 26', 26").

23. Organe de réglage (5, 10, 10', 10", 10'", 10"") selon au moins une des revendications 9 à 22, **caractérisé en ce que** l'élément d'axe de pivotement en forme de tourillon (22, 22', 22", 22"') est respectivement assemblé à l'élément de couplage (9, 26, 26', 26") et/ou à la section d'actionnement (18, 18') par un assemblage soudé.

24. Organe de réglage (5, 10, 10', 10", 10"', 10"") selon au moins une des revendications 9 à 23, **caractérisé en ce que** la tige de réglage (18, 18) est assemblée à l'élément de couplage (9, 26, 26', 26") par un assemblage soudé.

25. Organe de réglage (5) selon au moins une des revendications 9 à 24, **caractérisé en ce que** l'organe de réglage (5) présente un moyen de réglage électrique (6).

26. Organe de réglage (5, 10, 10', 10", 10"', 10"") selon au moins une des revendications 9 à 25, **caractérisé en ce que** le moyen de réglage (6, 14, 14') est disposé sur un côté compresseur (7) et la soupape de dérivation est disposée sur un côté turbine (3) du turbocompresseur à gaz d'échappement (2).
